# EUROPEAN PATENT SPECIFICATION

(11) **EP 4 574 527 B1**
(45) Date of publication and mention of the grant of the patent: **11.11.2026**
(21) Application number: 24215368.2
(22) Date of filing: 26.11.2024
(51) Int. Cl.: B60L 3/00

(54) **FULLY ELECTRIC DRIVE INTEGRATED SYSTEM**
INTEGRIERTES SYSTEM MIT VOLLELEKTRISCHEM ANTRIEB
SYSTÈME INTÉGRÉ D'ENTRAÎNEMENT ENTIÈREMENT ÉLECTRIQUE

(30) Priority: 18.12.2023 CN 202311740402
(43) Date of publication of application: 25.06.2025
(73) Proprietor: China Academy of Railway Sciences Corporation Limited, Beijing 100081 (CN); Beijing Zongheng Electro-Mechanical Technology Co., Ltd., 100094 Beijing City, Beijing (CN); Locomotive and Car Research Institute of China Academy of Railway Sciences Corporation Limited, Beijing City, Beijing 100081 (CN); Tieke Zongheng (Tianjin) Technology Development Co., Ltd, Tianjin 301700 (CN)
(72) Inventor: YANG, Weijun, Beijing City, 100081 (CN); GAO, Feng, Beijing City, 100081 (CN); LI, Yangtao, Beijing City, 100081 (CN); LIU, Bing, Beijing City, 100081 (CN); ZHANG, Yan, Beijing City, 100081 (CN); DONG, Guanglei, Beijing City, 100081 (CN); ZHANG, Xiang, Beijing City, 100081 (CN); MA, Yingtao, Beijing City, 100081 (CN); LI, Xiaoyong, Beijing City, 100081 (CN); HAN, Guangshun, Beijing City, 100081 (CN); ZHANG, Shunguang, Beijing City, 100081 (CN); ZHU, Guangchao, Beijing City, 100081 (CN); XIA, Fei, Beijing City, 100081 (CN); ZHANG, Bo, Beijing City, 100081 (CN); CAO, Hongfa, Beijing City, 100081 (CN); ZHAO, Hongwei, Beijing City, 100081 (CN); XUE, Jiang, Beijing City, 100081 (CN); KANG, Jinghui, Beijing City, 100081 (CN); LI, Bo, Beijing City, 100081 (CN); CHEN, Qian, Beijing City, 100081 (CN); LI, Yushan, Beijing City, 100081 (CN); ZHANG, Zherui, Beijing City, 100081 (CN); LI, Liran, Beijing City, 100081 (CN); MA, Ke, Beijing City, 100081 (CN); LI, Shenlong, Beijing City, 100081 (CN); LUO, Ying, Beijing City, 100081 (CN); YUAN, Tao, Beijing City, 100081 (CN); CHEN, Zhilei, Beijing City, 100081 (CN); WANG, Longlong, Beijing City, 100081 (CN)
(74) Representative: IP TRUST SERVICES

(56) References cited:
- CA-A1- 2 893 607
- CN-A- 106 240 582
- KR-A- 20180 012 576
- US-A1- 2021 354 566

## Description

### TECHNICAL FIELD

The present disclosure relates to the field of power control of rail transit trains, particularly to a fully electric drive integrated system.

### BACKGROUND

At present, a rail transit train typically adopts traction motors as the traction system, adopts pneumatic brake as a braking system, and these systems together constitute the motion system of the train.

The traction system is mainly composed of traction motors and a traction inverter. The main function of the traction system is to drive the train to move and provide a motion power source for the train. In addition, the motor's generator mode can be used to form regenerated energy, which is fed back to a power supply system to generate a brake force required by the train.

The brake system primarily consists of straight electro-pneumatic brake devices, which is managed by a microcomputer, cab equipment, an air supply device, an electric braking (regenerative brake) device and foundation braking devices, including tread and disk brakes. The main function of the brake system is to artificially and controllably apply a resistance to the running train to slow down the train until the train stops.

The traction system and the brake system are both provided individual control unit. The traction control units and the braking control units are connected to the train network control system to realize control and state information interaction.

At present, the architecture of the traditional train power system mainly has the following disadvantages:
1 The systems are independent from each other, but their functions are closely cooperation. For example, in a speed adjustment process, the application of the traction force or the brake force may be continuously adjusted to match, and in an electro-pneumatic composite brake process, an adjustment may be made between the regenerative brake force exerted by the traction system and the air brake force exerted by the brake system.
2. The composition of the system is complex. The traction system and the brake system are both key systems of the train, the system components are numerous and the composition is complex, so that the complexity of the whole train system is also increased.
3. The control units and the control functions are dispersed. Each system has its independent control unit, and the control functions are irrelevant, so that the execution of train-level functions requires the cooperation between the respective control units.
4. The system interfaces are complex. The interfaces of the respective systems to be interacted with the whole train may overlap, and some devices such as speed sensors should be configured separately.

Thus, the architecture of the traditional train power system adopts independent traction system and brake system, and the motion control of the train is completed by the coordination and cooperation between the two main systems. The systems have the above disadvantages, and there is room for design improvement. A scalable tractive-power system for electric railway-vehicles integrated into all-wheel electric steering and electric braking system, deriving 90% to 99% traction and dynamic efficiency are known from the prior art, for example from US2021/354566A1. A method for a braking operation of a wheel axle of a rail vehicle and braking system for a rail vehicle are known from the prior art, for example from CA2893607A1. Document CN106240582A defines the vagon of a train which comprises motors which are used only for regenerative braking during downhil operations.. Document KR20180012576A defines an hybrid system for vehicles in general wherein one of the motors operates only as generator of electricity, either driven by the ICE engine or during regenerative braking.

### SUMMARY

The present invention is defined by the independent claims. Further embodiments are set forth in the dependent claims. Any references to inventions or embodiments not falling within the scope of the independent claims are to be interpreted as examples useful for understanding the invention. The embodiments of the present disclosure mainly aim to provide a fully electric drive integrated system, so as to simplify the system composition and facilitate the system coordinated control.

In order to achieve the above objective, the embodiment of the present disclosure provide a fully electric drive integrated system, including:
a converter, an integration control unit connected to the converter, and power train driving motors and non-power train driving motors both of which are respectively connected to the converter;
and the integration control unit is configured to convert an external traction instruction into a torque instruction and convert an external brake instruction into a brake force instruction;
the converter is configured to convert an external input voltage into a traction Alternating Current (AC) voltage according to the torque instruction and transmit the traction AC voltage to the power train driving motors, so that the power train driving motors drive wheelsets to rotate through mechanical components; and
the power train driving motors and the non-power train driving motors convert mechanical energy from the mechanical component into a brake AC voltage and output the brake AC voltage to the converter, so that the converter converts the brake AC voltage into an output voltage according to the brake force instruction and outputs the output voltage to an external power grid.

In the fully electric drive integrated system according to the embodiment of the present disclosure, the integration control unit converts an external traction instruction into a torque instruction and converts an external brake instruction into a brake force instruction; the converter converts an input voltage into a traction AC voltage according to the torque instruction and transmits the traction AC voltage to the power train driving motors, so that the power train driving motors drive the wheelsets to rotate through the mechanical components; the power train driving motors and the non-power train driving motors convert mechanical energy from the mechanical component into a brake AC voltage and output the brake AC voltage to the converter, so that the converter converts the brake AC voltage into an output voltage according to the brake force instruction and outputs the output voltage to an external power grid. The present disclosure can simplify the system composition and facilitate the system coordinated control.

### BRIEF DESCRIPTION OF THE DRAWINGS

In order to explain the technical solutions in the embodiments of the present disclosure or in the prior art more clearly, the drawings required for describing the embodiments will be briefly introduced as follows. Obviously, the drawings in the following description merely illustrate some embodiments of the present disclosure, and those of ordinary skill in the art can obtain other drawings therefrom without paying an inventive effort.
FIG. 1 illustrates a schematic diagram of a fully electric drive integrated system according to the embodiment of the present disclosure;
FIG. 2 illustrates a schematic diagram of a converter according to an embodiment of the present disclosure;
FIG. 3 illustrates a schematic diagram of an emergency brake device according to an embodiment of the present disclosure; and
FIG. 4 illustrates a schematic diagram of an integration control unit according to an embodiment of the present disclosure.

### DESCRIPTION OF THE EMBODIMENTS

The technical solutions in the embodiments of the present disclosure will be clearly and completely described below with reference to the drawings for the embodiments of the present disclosure. Obviously, those described only illustrate a part, rather than all, of the embodiments of the present disclosure. Based on the embodiments of the present disclosure, any other embodiment obtained by those skilled in the art without paying an inventive effort should fall within the protection scope of the present disclosure.

Those skilled in the art should appreciate that the embodiments of the present disclosure may be implemented as a system, apparatus, device, method, or computer program product. Therefore, the present disclosure may be embodied in a form of complete hardware, complete software (including firmware, resident software, microcode, etc.), or a combination of hardware and software.

A fully electric drive integrated system of the present disclosure unifies and integrates motion systems of a train, and the overall basic motion control can be realized by an integrated fully electric drive system. The system is only provided with a necessary emergency brake device to provide an indemnificatory brake function in situation of emergency or power system failure. According to the architecture design of the present disclosure, the integration of the brake system and the traction system can be achieved, which can be achieved by a set of power systems and a necessary auxiliary device, thereby simplifying the system composition and facilitating the system coordinated control. Meanwhile, electrical interfaces of the subsystem and the whole train system are also simplified, so that the composition of the whole train system is greatly concise. The present disclosure will be described in detail below with reference to the drawings.

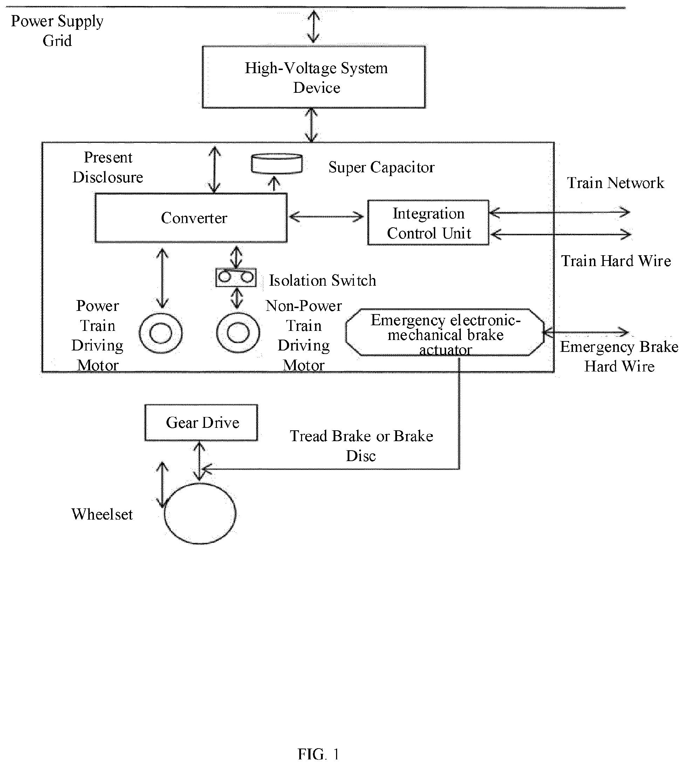

FIG. 1 illustrates a schematic diagram of a fully electric drive integrated system according to the embodiment of the present disclosure. As illustrated in FIG. 1, the fully electric drive integrated system includes:
a converter, an integration control unit connected to the converter, and power train driving motors and non-power train driving motors both of which are respectively connected to the converter.

The integration control unit is configured to convert an external traction instruction into a torque instruction and convert an external brake instruction into a brake force instruction. In this embodiment, the integration control unit, as the command center of motion control, converts a train operation control instruction into an instruction signal for an inverter driving module in the converter, and finally the driving motors generates a traction force.

The converter is configured to convert an external input voltage into a traction Alternating Current (AC) voltage according to the torque instruction and transmit the traction AC voltage to the power train driving motors, so that the power train driving motors drive wheelsets to rotate through mechanical components and performs a variable frequency speed control for the driving motors; and the converter is capable of further feeding back brake energy generated by the motors to a high-voltage system.

In this embodiment, the traction AC voltage is an AC voltage for realizing a traction function.

The power train driving motors and the non-power train driving motors are configured to convert mechanical energy from the mechanical component into a brake AC voltage and output the brake AC voltage to the converter, so that the converter converts the brake AC voltage into an output voltage according to the brake force instruction and outputs the output voltage to an external power grid.

In this embodiment, the brake AC voltage is an AC voltage generated to realize the brake function.

During implementation, the driving motors are driven by a voltage/frequency-adjustable three-phase AC power supply output by the converter, and the torque and the rotating speed of the motors are transmitted to the wheelsets through a gear-box of the train to drive the train to operate, thereby achieving the conversion from the electric energy to the mechanical energy. In a regenerative brake process, the train motion inertia causes the driving motors to rotate to generate a brake torque, so that the motors serve as a generator, and the generated electric energy is fed back to the power grid through the converter and the high-voltage device, thereby achieving the conversion from the mechanical energy to the electric energy.

In an embodiment, the fully electric drive integrated system further includes:
an emergency brake device (emergency electronic-mechanical brake actuators) is configured to apply an emergency brake force to a brake disc of the wheelsets according to an external emergency brake instruction.

The fully electric drive integrated system further includes: isolation switches, and the non-power train driving motors are connected to the converter through the isolation switches; and
the converter is configured to open the isolation switches according to the torque instruction, and close the isolation switches according to the brake force instruction.

In the traction process of the train, power externally supplied from the power grid to the train is transmitted to the converter through the high-voltage device of the train, and processed by the converter to form an adjustable AC power supply for the driving motors, so that the driving motors operates and generates a traction force required by the train.

In the brake process of the train, the converter is connected to the non-power train motors by controlling the isolation switches, the train motion inertia drives all the motors of the whole train to operate, and the motors serve as power generation devices to generate regenerative current, which is controlled and processed by the converter, and the controlled and processed regenerative current is transmitted to the high-voltage device of the train, and finally fed back to the power grid.

When the high-voltage system faults and the regenerated electric energy cannot be fed back to the power grid, a super capacitor (energy storage capacitor) is connected under the control of the converter, and the regenerated current acts on the super capacitor to store the generate electric energy, so that the brake force can still be exerted when the high-voltage system is abnormal. In the traction or brake process, the integration control unit collects an external control instruction, which may come from a train network or from a train hardwire signal. The integration control unit converts the control instruction into execution information for the drive control modules in the converter, and realizes the interaction of the control information through a bus communication between the integration control unit and the drive control modules.

As the brake devices for the system in the emergency situation, the emergency electronic-mechanical brake actuators adopt the form of electro-mechanical brake, and a trigger signal is given through emergency brake hardware of the train, and the emergency brake force is applied by the brake devices.

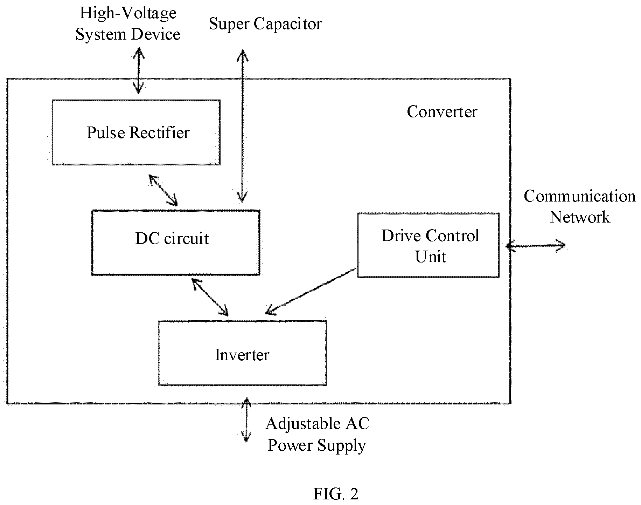

FIG. 2 illustrates a schematic diagram of a converter according to an embodiment of the present disclosure. As illustrated in FIG. 2, the converter includes:
a four-quadrant pulse rectifier;
a drive control unit connected to the integration control unit; and
an inverter connected to the pulse rectifier, the drive control unit, the power train driving motors and the non-power train driving motors respectively;
the pulse rectifier is configured to convert the input AC voltage from the train high-voltage system into a traction DC voltage, and convert a brake DC voltage from the inverter into the brake AC voltage, so as to feed back brake energy generated by the motors to the high-voltage system;
and the traction DC voltage is a DC voltage for realizing a traction function, and the brake DC voltage is a DC voltage generated to realize a brake function.

The drive control unit is configured to convert the torque instruction into a traction switching pulse, and convert the brake force instruction into a brake switching pulse; and
the inverter is configured to convert the traction DC voltage into the traction AC voltage with an adjustable voltage amplitude and an adjustable frequency according to the traction switching pulse and transmit the traction AC voltage to the driving motors, so as to meet the speed and torque adjustments within a certain range. In a regenerative brake process, the inverter further converts the brake AC voltage into the brake DC voltage according to the brake switching pulse.

In an embodiment, the converter further includes:
a DC circuit connected to the pulse rectifier and the inverter, respectively, and the DC circuit is configured to store the traction DC voltage and the brake DC voltage.

The super capacitor connected to the DC circuit has an energy storage function; and the DC circuit is further configured to store the brake DC voltage into the super capacitor.

During implementation, the pulse rectifier of the present disclosure is a grid-side converter in the system, which achieves a rectification effect during train traction by converting single-phase alternating current into direct current, and achieves an inversion effect during regenerative brake by converting direct current into single-phase alternating current and feeding back the single-phase alternating current to the power grid. The inverter converts a DC circuit voltage into a three-phase AC voltage, so as to provide a three-phase AC power supply with adjustable frequency and adjustable amplitude for the driving motors. The DC circuit of the traction converter provides an on-board power supply for the train, and the direct current is converted into three-phase alternating current supplied by the on-board power supply of the train through an auxiliary converter of the train.

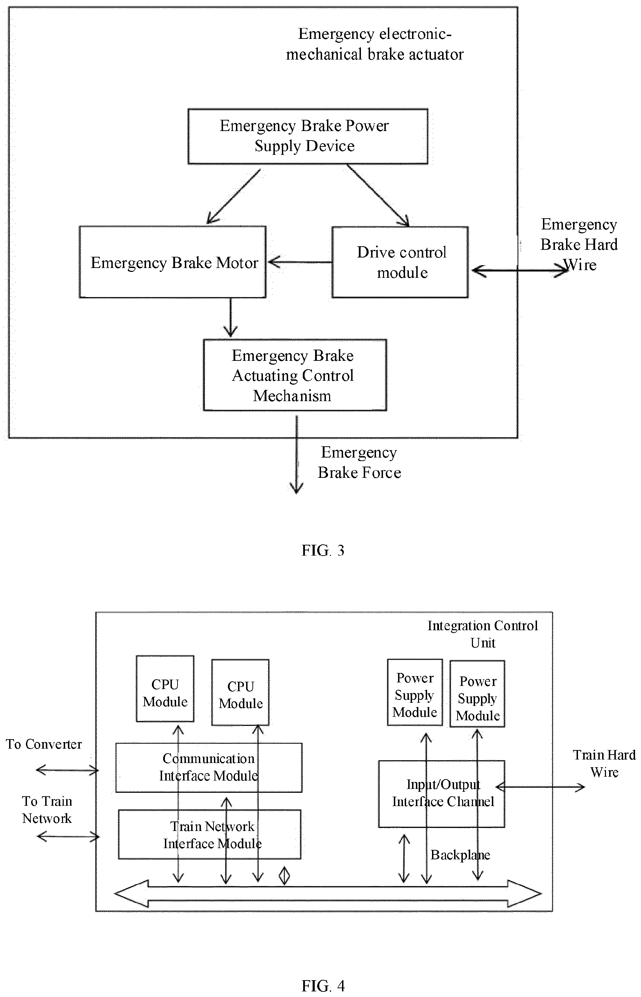

FIG. 3 illustrates a schematic diagram of an emergency brake device according to an embodiment of the present disclosure. As illustrated in FIG. 3, the emergency brake device (emergency electronic-mechanical brake actuators) includes:
emergency brake motors;
drive control modules connected to the emergency brake motors; and
brake actuators (emergency brake actuating control mechanism) connected to the emergency brake motors and the brake devices respectively.

The drive control modules are configured to control the emergency brake motors to drive the brake actuators according to an external emergency brake instruction, so as to apply an emergency brake force to the brake devices. The brake devices are a tread brake or a brake disc, and the brake actuators are a gear box.

In an embodiment, the emergency brake device further includes:
an emergency brake power supply device connected to the emergency brake motors and the drive control modules, respectively, and the emergency brake power supply device is configured to supply power to the emergency brake motors and the drive control modules.

During implementation, the emergency brake actuators are regenerative brake caliper mechanisms. The emergency electronic-mechanical brake actuators, when the train is given an emergency brake, the drive control modules collect a corresponding instruction and control the emergency brake motors to drive the brake actuators to apply emergency brake. The emergency brake device is provided with a separate power supply, to ensure that the emergency electronic-mechanical brake actuators can still apply emergency brake when the train has no external power supply.

FIG. 4 illustrates a schematic diagram of an integration control unit according to an embodiment of the present disclosure. As illustrated in FIG. 4, the integration control unit includes:
a central processing unit (CPU module);
an interface module connected to the central processing unit and the converter, respectively, and the interface module includes a communication interface module, a train network interface module and an input/output interface channel.

The central processing unit is configured to convert an external traction instruction into a torque instruction, convert an external brake instruction into a brake force instruction, and send the torque instruction or the brake force instruction to the converter through the interface module.

In an embodiment, the integration control unit further includes:
a power supply module connected to the central processing unit and the converter, and the power supply module is configured to supply power to the central processing unit and the converter, in which the power supply modules are in redundant setup and the number of the power supply modules may be more than one.

During implementation, the integration control unit is the command center of the fully electric drive motion control, which converts a train operation control instruction into an instruction signal for an inverter driving module in the converter, and finally the driving motors generates a traction force or regenerative brake is applied by the motors to generate a brake force. The integration control unit provides a reliable power supply for each module of the system through the redundant power supply module.

The CPU module is a core processing unit of the integration control unit, which is also in redundant setup and the number of the CPU modules may be more than one, and the CPU module is in a hot standby working mode. The CPU module realizes an interaction with a communication interface module and a train network interface module through a backplane bus. The communication interface module is an interaction channel to the drive control unit in the converter, and forwards the control instruction from the CPU module to the drive control unit of the converter to complete the control of the traction process or the brake process. Meanwhile, the communication interface module further feeds back state information of the converter to the CPU module to report a system state related to the converter.

The communication interface module adopts a dedicated real-time communication channel and does not connect or interact with the train communication network. The train communication network interface module is an interface of the integration control unit and the train communication network, and configured to realize a data transmission with the train communication network, interact with train instruction information transmitted from the network system, and send state information of the fully electric drive integrated system to the train network. The input/output interface channel is a hardwire signal channel interacted with the train, such as emergency traction, direction, and level information. The input/output interface channel directly collects a train hardwire instruction and directly feeds back system state information through the hardwire.

To sum up, the overall architecture of the fully electric drive integrated system of the present disclosure is as follows: the whole rail train may be divided into power and non-power trains. The power train of the whole train is provided with a converter; after being processed in corresponding link, power externally supplied to the train enters the converter, is processed by the converter, and converted into a switching pulse signal for driving motors through internal drive controllers; and finally the motors are driven by the pulse signal to generate a traction force. In the non-power train, motors are configured as dedicated motors for generating a regenerative brake force, so as to jointly exert the regenerative brake force with the driving motors of the power train. The motors of the non-power train are connected to the converter of the power train, and the connection wires are provided with controllable contactor switches, so that it is controlled that the connection is made to function only in situation of regenerative brake. In the regenerative brake process, the motors are driven to rotate by the train motion to serve as a generator for current generation, and the electric energy is fed back to a power supply system through the converter, thereby generating a regenerative brake force. A drive controller is provided in the converter, and the drive controller interacts with an external integration control unit through a communication network. The integration control unit collects the control signal sent by the train through the communication network and the train signal line, and transmits the control signal sent by the train through the communication network with the drive controller in the converter. In addition, an emergency brake instruction line of the train is connected to an emergency electronic-mechanical brake actuators, and emergency brake is applied after the instruction line sends a trigger signal.

Therefore, according to the present disclosure, the traction system and the brake system of the rail transit train are integrated, the traction and brake of the train are realized through a fully electric drive solution, and the complexity of the system is reduced; the traction and brake functions can be in centralized and unified management, and the train operation can be guaranteed just by exerting the required traction force or brake force by a unified power control system during the train operation; and an electrically-driven emergency brake device is provided in the system to achieve the emergency brake in an emergency situation.

The traction process of the fully electric drive integrated system of the present disclosure is as follows:
(1) the external high voltage enters the converter after being processed by the high-voltage system device;
(2) the input voltage is rectified into direct current in the converter, and stored in a DC circuit (intermediate DC link);
(3) the integration control unit obtains corresponding traction instruction information through the train network or a train hardwire circuit, converts the instruction into a torque instruction to be applied, and transmits the torque instruction to the drive control unit in the converter through an internal communication bus;
(4) the drive control unit converts the torque instruction transmitted by the integration control unit into a switching pulse for an inverter;
(5) the inverter inverts the direct current into three-phase alternating current with an adjustable voltage amplitude and an adjustable frequency; and
(6) the adjustable three-phase alternating current is transmitted to driving motors to adjust the speed and the torque within a certain range. The motors finally drive wheelsets to rotate through mechanical components such as a gear box, thereby realizing the traction function of the train.

The brake process of the fully electric drive integrated system under non-emergency brake conditions is as follows:
(1) the drive control unit in the converter controls the isolation switches of the non-power train driving motors to put the driving motors into use;
(2) the train motion inertia drives the motors of the whole train to rotate;
(3) the integration control unit obtains corresponding brake instruction information through the train network or the train hardwire circuit, converts the instruction into a brake force instruction to be applied, and transmits the brake force instruction to the drive control unit in the converter through an internal communication bus;
(4) the drive control unit controls the inverter to keep the motors in a power generating state;
(5) the inverter works in a rectification state, and three-phase alternating current from the motors is rectified into direct current to charge the DC circuit, so that the voltage of the DC circuit increases;
(6) the pulse rectifier works in an inversion state, and the direct current in the DC circuit is inverted into alternating current, which is fed back to the power grid through a high-voltage system device, thereby realizing a regenerative brake function through the conversion from mechanical energy to electric energy; and
(7) when the high-voltage system is abnormal, the electric energy regenerated by the regenerative brake cannot be fed back to the power grid, so that the regenerative brake force cannot be effectively generated. Under such working condition, the converter charges a super capacitor through the DC circuit to store the electric energy generated by the regenerative brake, thereby ensuring that the regenerative brake function is effectively applied. It should be noted that the super capacitor should ensure that charging can be performed under an abnormal condition of the high-voltage system. Thus, after being stored in the super capacitor, the electric energy should be consumed in time through a traction process, thereby ensuring that energy can be stored under an abnormal working condition.

The emergency brake process of the fully electric drive integrated system is as follows:
(1) when the fully electric drive integrated system cannot ensure effective application of the brake force or the train is in an emergency situation, the train sends an emergency brake instruction through an emergency brake hardwire;
(2) the emergency electronic-mechanical brake actuators are powered by the power supply module, and the drive control modules collect corresponding instructions; and
(3) the drive control modules control the emergency brake motors to enable the electric caliper device to act on the brake devices, so as to generate an emergency brake force.

The power system of the existing train is composed of a traction system and a brake system, in which the traction system is mainly responsible for the exertion of the traction force and the regenerative brake force; the brake system generally adopts an air brake system and mainly provides friction brake; in the train operation process, the traction system is mainly responsible for the exertion of the traction force; and in the brake process, depending on different working conditions, the regenerative brake force generated by traction and the friction brake force of the brake system are cooperated with each other, and the emergency brake is also achieved by the brake system.

The present disclosure differs from other existing train motion systems as follows:
Distinction 1: the present disclosure adopts a fully electric drive design in which a traction system and a brake system are integrated, and the traction and brake functions of the train are jointly completed by a converter, driving motors and an integration control unit. Traction and brake no longer require separate systems, but are realized by a unified integration system. The traction force and the brake force required by the train in the conventional operation process except emergency brake are all generated by a fully electric drive system, and the traction and brake processes are both conversions between electric energy and kinetic energy, without depending on the cooperation between the traditional traction system and the brake system.

Distinction 2: the integration control management of the train motion control can be realized by using the integration control unit. The motion control instruction sent by the train and the control interaction with traction and brake actuating are realized by the integration control unit. Compared with the traditional system, there are no independent devices such as the central control unit, the traction control unit and the brake control unit. The interaction process of the control signals is simpler and more efficient.

Distinction 3: in order to improve the regenerative brake capability of the train, the non-power train is also provided with driving motors connected to the converter of the power train. In the brake process, the motors of the non-power train can improve the brake capability of the train through regenerative brake, thereby solving the problem of insufficient regenerative brake capability of the traditional train traction system.

Distinction 4: the air brake system is cancelled and only the emergency electronic-mechanical brake actuators is provided in the train. The emergency electronic-mechanical brake actuators are only used to realize the emergency brake function of the train, and the function of the system is unique. Compared with the traditional system, the system of the present disclosure no longer participates in the control of conventional brake, so the composition is greatly simplified, and the friction loss of the train is greatly reduced because the system only works under the emergency brake conditions.

Distinction 5: the train is provided with a super capacitor, which serves as a temporary energy storage device to store electric energy generated by regenerative brake when the high-voltage system is abnormal and the electric energy cannot be fed back to the power grid, so that the train can normally exert the regenerative brake force.

To sum up, the fully electric drive integrated system according to the embodiment of the present disclosure has the following advantageous effects:
1. The fully electric drive integrated system is adopted, the conventional air brake system is cancelled and the electronic-mechanical brake actuators is reserved, and the emergency electronic-mechanical brake actuators only works under emergency brake conditions, so that the present disclosure is greatly simplified compared with the key system design of the traditional air brake train. Compared with the general electronic-mechanical brake system, only the emergency brake is exerted, the connection with the train signal line is reduced and the brake control unit is cancellable, so that the overall complexity is decreased, and the reliability of the system is higher than that of the original independent traction system and brake system.
2. The traction and brake control process of the fully electric drive integrated system is more efficient, especially in the link of brake control, only the regenerative brake force is used to realize the brake function, and the interaction process is greatly simplified compared with the cooperation between the traction system and the brake system of the existing train.
3. The fully electric drive integrated system takes the electronic-mechanical brake actuators as the emergency brake device of the system, and only exerts the brake function in emergency situations. Therefore, compared with the existing system, the brake wear of the train is greatly reduced, the system is greener and more economical, and the maintenance cost of the system can be effectively reduced.
4. In the control interaction process of the fully electric drive system, the integration control unit directly interacts with the train line, the train network and the converter driving device, which greatly simplifies the interaction link and improves the execution efficiency.

The specific embodiments described above further illustrate the objectives, technical solutions and advantageous effects of the present disclosure in detail.

Those skilled in the art can also understand that various illustrative logical blocks, units, and steps listed in the embodiments of the present disclosure may be implemented by electronic hardware, computer software, or a combination thereof. In order to clearly show the interchangeability between hardware and software, the functions of the above illustrative components, units and steps have been generally described. Whether such functions are realized by hardware or software depends on the specific application and the design requirements of the whole system. Those skilled in the art can use various methods to implement the described functions for each specific application, but the implementation should not be understood as going beyond the protection scope of the embodiments of the present disclosure.

Various illustrative logic blocks, units, or devices described in the embodiments of the present disclosure can realize or operate the described functions through the design of a general processor, a digital signal processor, an Application Specific Integrated Circuit (ASIC), a field programmable gate array or other programmable logic device, a discrete gate or transistor logic, a discrete hardware component, or any combination thereof. The general processor may be a microprocessor; alternatively, the general processor may also be any traditional processor, controller, microcontroller or state machine. The processor may be implemented by a combination of computing devices, such as a digital signal processor and a microprocessor, a plurality of microprocessors, one or more microprocessors in conjunction with one digital signal processor core, or any other similar configuration.

The steps of the method or the algorithm described in the embodiments of the present disclosure may be directly embedded into hardware, a software module executed by a processor, or a combination thereof. The software module may be stored in a Random-Access Memory (RAM), a flash memory, a Read-Only Memory (ROM), an Electrically Programmable ROM (EPROM), an Electrically Erasable Programmable ROM (EEPROM), a register, a hard disc, a removable disc, a Compact Disc-ROM (CD-ROM) or a storage medium of any other form in the art. For example, the storage medium may be connected to the processor, so that the processor can read and write information from and into the storage medium. Optionally, the storage medium may also be integrated into the processor. The processor and the storage medium may be disposed in an Application Specific Integrated Circuit (ASIC) that may be provided in a user terminal. Optionally, the processor and the storage medium may also be disposed in different parts of the user terminal.

In one or more exemplary designs, the functions described by the embodiments of the present disclosure may be realized by hardware, software, firmware or combinations thereof. When being realized in software, the functions may be stored in a computer readable medium, or transmitted therein in the form of one or more instructions or codes. The computer readable medium includes a computer storage medium and a communication medium that facilitates a computer program to be transferred from one place to another place. The storage medium may be an available medium that can be accessed by any general or special computer. For example, such a computer readable medium may include, but not limited to, an RAM, an ROM, an EEPROM, a CD-ROM, other optical disc storage, other magnetic disc storage, other magnetic storage device, or any other medium for bearing or storing program codes in the form of instructions or data structures and other forms readable by a general or special computer or processor. In addition, any connection can be properly defined as a computer-readable medium. For example, if the software is transmitted from a website, a server or any other remote resource through a coaxial cable, an optical fiber cable, a twisted pair, a Digital Subscriber Line (DSL) or for example by infrared, wireless, microwave and other wireless means, it is also included in the defined computer-readable medium. The disks and discs include compact discs, laser discs, optical discs, DVDs, floppy discs and Blu-ray discs. The disc usually copies data magnetically, and the disk usually copies data optically with laser light. The above combinations can also be included in the computer-readable medium.

## Claims

1. A fully electric drive integrated system, comprising:
a converter, an integration control unit connected to the converter, and power train driving motors and non-power train driving motors both of which are respectively connected to the converter;
wherein the integration control unit is configured to convert an external traction instruction into a torque instruction and convert an external brake instruction into a brake force instruction;
the converter is configured to convert an external input voltage into a traction Alternating Current, AC, voltage according to the torque instruction and transmit the traction AC voltage to the power train driving motors, so that the power train driving motors drive wheelsets to rotate through mechanical components, wherein the external input voltage enters the converter after being processed by a high-voltage system device;
the power train driving motors and the non-power train driving motors convert mechanical energy from the mechanical component into a brake AC voltage and output the brake AC voltage to the converter, so that the converter converts the brake AC voltage into an output voltage according to the brake force instruction and outputs the output voltage to an external power grid through the high-voltage system, and when the high-voltage system is abnormal, the converter outputs the output voltage to a super capacitor, wherein the non-power train driving motors are motors which do not provide traction but are only used to generate power when used for electrodynamic braking; and
the fully electric drive integrated system further comprises:
isolation switches;
wherein the non-power train driving motors are connected to the converter through the isolation switches; and
the converter is configured to open the isolation switches by a drive control unit according to the torque instruction, and close the isolation switches according to the brake force instruction.

2. The fully electric drive integrated system according to claim 1, further comprising:
an emergency brake device configured to apply an emergency brake force to brake devices of the wheelsets according to an external emergency brake instruction.

3. The fully electric drive integrated system according to claim 1, wherein the converter comprises:
a pulse rectifier;
the drive control unit connected to the integration control unit; and
an inverter connected to the pulse rectifier, the drive control unit, the power train driving motors and the non-power train driving motors respectively;
wherein the pulse rectifier is configured to convert the input voltage into a traction Direct Current, DC, voltage, and convert a brake DC voltage from the inverter into the brake AC voltage;
the drive control unit is configured to convert the torque instruction into a traction switching pulse, and convert the brake force instruction into a brake switching pulse; and
the inverter is configured to convert the traction DC voltage into the traction AC voltage according to the traction switching pulse, and convert the brake AC voltage into the brake DC voltage according to the brake switching pulse.

4. The fully electric drive integrated system according to claim 3, wherein the converter further comprises:
a DC circuit connected to the pulse rectifier and the inverter, respectively, wherein the DC circuit is configured to store the traction DC energy and the brake DC energy.

5. The fully electric drive integrated system according to claim 4, wherein the converter further comprises:
a super capacitor connected to the DC circuit, and the DC circuit is further configured to store the brake DC energy into the super capacitor.

6. The fully electric drive integrated system according to claim 2, wherein the emergency brake device comprises:
emergency brake motors;
drive control modules connected to the emergency brake motors; and
brake actuators connected to the emergency brake motors and the brake devices, respectively;
wherein the drive control modules are configured to control the emergency brake motors to drive the brake actuators according to the external emergency brake instruction, so as to apply the emergency brake force to the brake devices.

7. The fully electric drive integrated system according to claim 6, wherein the emergency brake device further comprises:
an emergency brake power supply device connected to the emergency brake motors and the drive control modules, respectively, and the emergency brake power supply device is configured to supply power to the emergency brake motors and the drive control modules.

8. The fully electric drive integrated system according to claim 2, wherein the integration control unit comprises:
a central processing unit;
an interface module connected to the central processing unit and the converter, respectively;
wherein the central processing unit is configured to convert an external traction instruction into a torque instruction, convert an external brake instruction into a brake force instruction, and send the torque instruction or the brake force instruction to the converter through the interface module.

9. The fully electric drive integrated system according to claim 8, wherein the integration control unit further comprises:
a power supply module connected to the central processing unit and the converter, wherein the power supply module is configured to supply power to the central processing unit and the converter.

## Patentansprüche

1. Integriertes vollelektrisches Antriebssystem, umfassend:
einen Wandler, eine mit dem Wandler verbundene Integrationssteuereinheit sowie Antriebsstrang-Antriebsmotoren und Nicht-Antriebsstrang-Antriebsmotoren, die beide jeweils mit dem Wandler verbunden sind;
wobei die Integrationssteuereinheit dazu konfiguriert ist, eine externe Traktionsanweisung in eine Drehmomentanweisung umzuwandeln und eine externe Bremsanweisung in eine Bremskraftanweisung umzuwandeln;
der Wandler dazu konfiguriert ist, eine externe Eingangsspannung gemäß der Drehmomentanweisung in eine Traktionswechselspannung (Traktions-AC-Spannung) umzuwandeln und die Traktionswechselspannung an die Antriebsstrang-Antriebsmotoren zu übertragen, sodass die Antriebsstrang-Antriebsmotoren über mechanische Komponenten Radsätze in Drehung versetzen, wobei die externe Eingangsspannung in den Wandler eintritt, nachdem sie durch eine Hochspannungssystemvorrichtung verarbeitet wurde;
die Antriebsstrang-Antriebsmotoren und die Nicht-Antriebsstrang-Antriebsmotoren mechanische Energie aus der mechanischen Komponente in eine Bremswechselspannung umwandeln und die Bremswechselspannung an den Wandler ausgeben, sodass der Wandler die Bremswechselspannung gemäß der Bremskraftanweisung in eine Ausgangsspannung umwandelt und die Ausgangsspannung über das Hochspannungssystem an ein externes Stromnetz ausgibt, und wenn das Hochspannungssystem anormal ist, der Wandler die Ausgangsspannung an einen Superkondensator ausgibt, wobei die Nicht-Antriebsstrang-Antriebsmotoren Motoren sind, die keine Traktion bereitstellen, sondern nur verwendet werden, um Leistung zu erzeugen, wenn sie für elektrodynamisches Bremsen verwendet werden, und
das integrierte vollelektrische Antriebssystem umfasst ferner:
Trennschalter;
wobei die Nicht-Antriebsstrang-Antriebsmotoren über die Trennschalter mit dem Wandler verbunden sind, und
der Wandler dazu konfiguriert ist, die Trennschalter über eine Antriebssteuereinheit gemäß der Drehmomentanweisung zu öffnen und die Trennschalter gemäß der Bremskraftanweisung zu schließen.

2. Integriertes vollelektrisches Antriebssystem nach Anspruch 1, ferner umfassend:
eine Notbremsvorrichtung, die dazu konfiguriert ist, gemäß einer externen Notbremsanweisung eine Notbremskraft auf Bremsvorrichtungen der Radsätze auszuüben.

3. Integriertes vollelektrisches Antriebssystem nach Anspruch 1, wobei der Wandler Folgendes umfasst:
einen Impulsgleichrichter;
die mit der Integrationssteuereinheit verbundene Antriebssteuereinheit und
einen Wechselrichter, der jeweils mit dem Impulsgleichrichter, der Antriebssteuereinheit, den Antriebsstrang-Antriebsmotoren und den Nicht-Antriebsstrang-Antriebsmotoren verbunden ist;
wobei der Impulsgleichrichter dazu konfiguriert ist, die Eingangsspannung in eine Traktionsgleichspannung (Traktions-DC-Spannung) umzuwandeln und eine Bremsgleichspannung von dem Wechselrichter in die Bremswechselspannung umzuwandeln;
die Antriebssteuereinheit dazu konfiguriert ist, die Drehmomentanweisung in einen Traktionsschaltimpuls umzuwandeln und die Bremskraftanweisung in einen Bremsschaltimpuls umzuwandeln, und
der Wechselrichter dazu konfiguriert ist, die Traktionsgleichspannung gemäß dem Traktionsschaltimpuls in die Traktionswechselspannung umzuwandeln und die Bremswechselspannung gemäß dem Bremsschaltimpuls in die Bremsgleichspannung umzuwandeln.

4. Integriertes vollelektrisches Antriebssystem nach Anspruch 3, wobei der Wandler ferner umfasst:
eine Gleichstromschaltung, die mit dem Impulsgleichrichter bzw. dem Wechselrichter verbunden ist, wobei die Gleichstromschaltung dazu konfiguriert ist, die Traktionsgleichstromenergie und die Bremsgleichstromenergie zu speichern.

5. Integriertes vollelektrisches Antriebssystem nach Anspruch 4, wobei der Wandler ferner umfasst:
einen Superkondensator, der mit der Gleichstromschaltung verbunden ist, und wobei die Gleichstromschaltung ferner dazu konfiguriert ist, die Bremsgleichstromenergie in dem Superkondensator zu speichern.

6. Integriertes vollelektrisches Antriebssystem nach Anspruch 2, wobei die Notbremsvorrichtung Folgendes umfasst:
Notbremsmotoren;
mit den Notbremsmotoren verbundene Antriebssteuermodule und
Bremsaktuatoren, die mit den Notbremsmotoren bzw. den Bremsvorrichtungen verbunden sind;
wobei die Antriebssteuermodule dazu konfiguriert sind, die Notbremsmotoren zu steuern, um die Bremsaktuatoren gemäß der externen Notbremsanweisung anzutreiben, um die Notbremskraft auf die Bremsvorrichtungen auszuüben.

7. Integriertes vollelektrisches Antriebssystem nach Anspruch 6, wobei die Notbremsvorrichtung ferner umfasst:
eine Notbrems-Stromversorgungsvorrichtung, die mit den Notbremsmotoren bzw. den Antriebssteuermodulen verbunden ist, wobei die Notbrems-Stromversorgungsvorrichtung dazu konfiguriert ist, die Notbremsmotoren und die Antriebssteuermodule mit Strom zu versorgen.

8. Integriertes vollelektrisches Antriebssystem nach Anspruch 2, wobei die Integrationssteuereinheit Folgendes umfasst:
eine zentrale Verarbeitungseinheit;
ein Schnittstellenmodul, das mit der zentralen Verarbeitungseinheit bzw. dem Wandler verbunden ist;
wobei die zentrale Verarbeitungseinheit dazu konfiguriert ist, eine externe Traktionsanweisung
in eine Drehmomentanweisung umzuwandeln, eine externe Bremsanweisung in eine Bremskraftanweisung umzuwandeln und die Drehmomentanweisung oder die Bremskraftanweisung über das Schnittstellenmodul an den Wandler zu senden.

9. Integriertes vollelektrisches Antriebssystem nach Anspruch 8, wobei die Integrationssteuereinheit ferner umfasst:
ein Leistungsversorgungsmodul, das mit der zentralen Verarbeitungseinheit und dem Wandler verbunden ist, wobei das Leistungsversorgungsmodul dazu konfiguriert ist, die zentrale Verarbeitungseinheit und den Wandler mit Strom zu versorgen.

## Revendications

1. Système intégré d'entraînement entièrement électrique, comprenant :
un convertisseur, une unité de commande d'intégration connectée au convertisseur, et des moteurs d'entraînement de groupe motopropulseur et des moteurs d'entraînement autres que de groupe motopropulseur qui sont tous deux respectivement connectés au convertisseur ;
dans lequel l'unité de commande d'intégration est configurée pour convertir une instruction de traction externe en une instruction de couple et convertir une instruction de freinage externe en une instruction de force de freinage ;
le convertisseur est configuré pour convertir une tension d'entrée externe en une tension de traction à courant alternatif, CA, en fonction de l'instruction de couple et transmettre la tension CA de traction aux moteurs d'entraînement du groupe motopropulseur, de sorte que les moteurs d'entraînement du groupe motopropulseur entraînent les essieux montés en rotation par l'intermédiaire de composants mécaniques, dans lequel la tension d'entrée externe entre dans le convertisseur après avoir été traitée par un dispositif de système à haute tension ;
les moteurs d'entraînement du groupe motopropulseur et les moteurs d'entraînement autres que de groupe motopropulseur convertissent l'énergie mécanique provenant du composant mécanique en une tension alternative de freinage et délivrent la tension alternative de freinage au convertisseur, de sorte que le convertisseur convertit la tension alternative de freinage en une tension de sortie selon l'instruction de force de freinage et délivre la tension de sortie à un réseau électrique externe par l'intermédiaire du système à haute tension, et lorsque le système à haute tension est anormal, le convertisseur délivre la tension de sortie à un super condensateur, dans lequel les moteurs d'entraînement autres que du groupe motopropulseur sont des moteurs qui ne fournissent pas de traction mais sont uniquement utilisés pour générer de l'énergie lorsqu'ils sont utilisés pour le freinage électrodynamique ; et
le système intégré d'entraînement entièrement électrique comprend en outre :
des interrupteurs d'isolement ;
dans lequel les moteurs d'entraînement autres que du groupe motopropulseur sont connectés au convertisseur par l'intermédiaire des interrupteurs d'isolement ; et
le convertisseur est configuré pour ouvrir les interrupteurs d'isolement par une unité de commande d'entraînement selon l'instruction de couple, et fermer les interrupteurs d'isolement selon l'instruction de force de freinage.

2. Système intégré d'entraînement entièrement électrique selon la revendication 1, comprenant en outre :
un dispositif de freinage d'urgence configuré pour appliquer une force de freinage d'urgence aux dispositifs de freinage des essieux montés selon une instruction de freinage d'urgence externe.

3. Système intégré d'entraînement entièrement électrique selon la revendication 1, dans lequel le convertisseur comprend :
un redresseur d'impulsions ;
l'unité de commande d'entraînement connectée à l'unité de commande d'intégration ; et
un onduleur connecté au redresseur d'impulsions, à l'unité de commande d'entraînement, aux moteurs d'entraînement du groupe motopropulseur et aux moteurs d'entraînement hors groupe motopropulseur respectivement ;
dans lequel le redresseur d'impulsions est configuré pour convertir la tension d'entrée en une tension de traction en courant continu, CC, et convertir une tension continue de freinage provenant de l'onduleur en la tension alternative de freinage ;
l'unité de commande d'entraînement est configurée pour convertir l'instruction de couple en une impulsion de commutation de traction, et convertir l'instruction de force de freinage en une impulsion de commutation de freinage ; et
l'onduleur est configuré pour convertir la tension continue de traction en tension alternative de traction en fonction de l'impulsion de commutation de traction, et convertir la tension alternative de freinage en tension continue de freinage en fonction de l'impulsion de commutation de freinage.

4. Système intégré d'entraînement entièrement électrique selon la revendication 3, dans lequel le convertisseur comprend en outre :
un circuit à courant continu connecté au redresseur d'impulsions et à l'onduleur, respectivement, dans lequel le circuit à courant continu est configuré pour stocker l'énergie à courant continu de traction et l'énergie à courant continu de freinage.

5. Système intégré d'entraînement entièrement électrique selon la revendication 4, dans lequel le convertisseur comprend en outre :
un super condensateur connecté au circuit à courant continu, et le circuit à courant continu est en outre configuré pour stocker l'énergie de freinage à courant continu dans le super condensateur.

6. Système intégré d'entraînement entièrement électrique selon la revendication 2, dans lequel le dispositif de freinage d'urgence comprend :
des moteurs de freinage d'urgence ;
des modules de commande d'entraînement connectés aux moteurs de freinage d'urgence ; et
des actionneurs de freinage reliés aux moteurs de freinage d'urgence et aux dispositifs de freinage, respectivement ;
dans lequel les modules de commande d'entraînement sont configurés pour commander les moteurs de freinage d'urgence afin d'entraîner les actionneurs de freinage en fonction de l'instruction de freinage d'urgence externe, de manière à appliquer la force de freinage d'urgence aux dispositifs de freinage.

7. Système intégré d'entraînement entièrement électrique selon la revendication 6, dans lequel le dispositif de freinage d'urgence comprend en outre :
un dispositif d'alimentation électrique de freinage d'urgence connecté aux moteurs de freinage d'urgence et aux modules de commande d'entraînement, respectivement, et le dispositif d'alimentation électrique de freinage d'urgence est configuré pour alimenter les moteurs de freinage d'urgence et les modules de commande d'entraînement.

8. Système intégré d'entraînement entièrement électrique selon la revendication 2, dans lequel l'unité de commande d'intégration comprend :
une unité centrale de traitement ;
un module d'interface connecté à l'unité centrale de traitement et au convertisseur, respectivement ;
dans lequel l'unité centrale de traitement est configurée pour convertir une instruction de traction externe
en une instruction de couple, convertir une instruction de freinage externe en une instruction de force de freinage, et envoyer l'instruction de couple ou l'instruction de force de freinage au convertisseur par l'intermédiaire du module d'interface.

9. Système intégré d'entraînement entièrement électrique selon la revendication 8, dans lequel l'unité de commande d'intégration comprend en outre :
un module d'alimentation connecté à l'unité centrale de traitement et au convertisseur, dans lequel le module d'alimentation est configuré pour alimenter l'unité centrale de traitement et le convertisseur.
